(19) Europäisches Patentamt
European Patent Office
Office européen des brevets

(11) **EP 2 991 444 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(51) Int Cl.:
*H05B 1/02* (2006.01)  *H05B 6/06* (2006.01)

(21) Anmeldenummer: **15181680.8**

(22) Anmeldetag: **20.08.2015**

(54) **REGELN EINER TEMPERATUR EINES GARGUTS**

REGULATING A TEMPERATURE OF AN ITEM TO BE COOKED

REGLAGE D'UNE TEMPERATURE D'UN PRODUIT DE CUISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2014 DE 102014217010**

(43) Veröffentlichungstag der Anmeldung:
**02.03.2016 Patentblatt 2016/09**

(73) Patentinhaber: **BSH Hausgeräte GmbH**
**81739 München (DE)**

(72) Erfinder:
• **Has, Uwe, Dr.**
**84579 Unterneukirchen (DE)**
• **Marbach, Andreas**
**83374 Traunwalchen (DE)**
• **Schuhbäck, Peter**
**83329 Holzhausen (DE)**

(56) Entgegenhaltungen:
WO-A1-2014/190160     FR-A1- 2 931 648
US-A- 5 746 114     US-A1- 2007 080 158

**Beschreibung**

Die Erfindung betrifft ein Verfahren zum Regeln einer Temperatur eines Garguts, bei dem eine Temperaturmesseinrichtung Temperaturinformation an ein Gargerät mit bestimmten Zeitpunkten überträgt und die Zeitpunkte der Übertragung der Temperaturinformation auf einer Grundlage der Temperaturinformation angepasst werden. Die Erfindung betrifft auch ein System mit einem Gargerät und mindestens einer Temperaturmesseinrichtung, wobei das System zur Durchführung des Verfahrens eingerichtet ist. Die Erfindung betrifft ferner eine Temperaturmesseinrichtung für Gargut mit einem Sender zum Übertragen von Temperaturinformation. Die Erfindung ist insbesondere anwendbar auf eine Temperaturmesseinrichtung mit einem Energiespeicher. Die Erfindung ist insbesondere anwendbar auf eine Temperaturmesseinrichtung zum insbesondere lösbaren Anbringen an einer Außenseite eines Gargutbehälters.

DE 10 2004 013 621 A1 offenbart ein autarkes Messgerät für Dampfgarer, das eine tragbare, in einen Dampfgarer legbare Einheit ist, die eine Sensorschaltung zur Erzeugung von Messsignalen in Abhängigkeit von mindestens einem Sensor zum Detektieren von Betriebszuständen in dem Dampfgarer enthält, einen Funksender zum leitungslosen Senden von Funksignalen in Abhängigkeit von den Messsignalen der Sensorschaltung zu einem außerhalb des Dampfgarers angeordneten Funkempfänger enthält, wobei der Funksender eine Sendereichweite von mehr als 5 m, insbesondere mindestens 10 m, im abschirmfreien Luftraum hat, und eine autarke Stromversorgung enthält. Die Stromversorgung kann eine Stromquelle in Form eines wiederaufladbaren Akkumulators oder einer Batterie oder mindestens eine Aufnahmekammer dafür enthalten. Der Funksender kann zum getakteten Senden der Funksignale ausgebildet sein.

DE 10 2008 015 973 A1 offenbart eine Vorrichtung zum Kochen von Speisen, die versehen ist mit einem Temperaturfühler, einem akustischen sowie einem optischen Signalgeber und einer elektronischen Baugruppe, welche das Erreichen einer vorgegebenen Erhitzungsdauer oder bei Überhitzung ein akustisches und/oder optisches Signal gibt. Zudem kann ein Sendegerät in der elektronischen Baugruppe integriert sein, welches eine externe Überwachung der Temperatur und der Gardauer am Gargut ermöglicht sowie eine individuelle Programmierung des Überwachungsmodus in der elektronischen Baugruppe zulässt. Es wird kabellos lediglich durch Batteriebetrieb mit Strom versorgt. Das Kochgerät erkennt eigenständig das spezifische Erhitzungsverhalten eines beliebigen Garguts im Kochgerät und gibt dann selbständig ein akustisches Signal, wenn eine Überschreitung einer bestimmten Temperatur und Gardauer vorliegt. Das Kochgerät weist dabei durch eine effiziente Programmierung eine geringe Batteriebeanspruchung auf, was zu einer langen Lebensdauer der Batterie führt.

Beiden Vorrichtungen ist es gemein, dass ihre Betriebsdauer mit einer Batterieladung immer noch geringer ist als wünschenswert.

US 2007/080158 A1 offenbart ein Kochgerät mit einer Trägereinheit für Kochgeschirr und einer Heizeinrichtung zum Beheizen des Kochgeschirrs. Eine Empfangseinheit ist in der Lage, Temperaturinformationen vom Kochgeschirr zu empfangen, die durch Infrarotstrahlen übertragen werden.

US 5 746 114 A offenbart ein intelligentes Kochsystem mit Kochutensilien, die einen Temperatursensor aufweisen. Dieser misst entweder der Temperatur des Kochutensils selbst oder die Temperatur des Inhalts.

WO 2014/190160 A1 offenbart eine Niederdruck-Garmethode, sowie ein dazu geeignetes Kochutensil.

FR 2 931 648 A1 offenbart einen Schnellkochtopf mit einem Drucksensor und einem Temperatursensor. Der Schnellkochtopf weist ferner einen Prozessor zur Signalverarbeitung, sowie eine Funkübertragungsstrecke auf.

Es ist die **Aufgabe** der vorliegenden Erfindung, die Nachteile des Standes der Technik zumindest teilweise zu überwinden und insbesondere eine besonders energieeffiziente Möglichkeit zum Betreiben einer insbesondere mit einem Energiespeicher versehenen Temperaturmesseinrichtung für Gargut bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Regeln einer Temperatur eines Garguts, bei dem eine Temperaturmesseinrichtung eine Temperaturinformation an ein Gargerät mit bestimmten Zeitpunkten überträgt, und die Zeitpunkte einer Übertragung der Temperaturinformation auf einer Grundlage bzw. beruhend auf der Temperaturinformation angepasst werden, wobei die Zeitpunkte der Übertragung der Temperaturinformation beruhend auf einer Temperaturdifferenz zwischen einem gemessenen Temperatur-Istwert und einem Temperatur-Sollwert angepasst werden.

Dieses Verfahren ergibt den Vorteil, dass dann, wenn die Temperaturinformation es zulässt, die Zeitpunkte der Übertragung der Temperaturinformation auf einen geringeren Energieverbrauch hin angepasst werden können. Dadurch lässt sich insbesondere dann eine Betriebsdauer verlängern, wenn die Temperaturmesseinrichtung mittels eines Energiespeichers und/oder einer autarken Energiequelle wie einem Thermogenerator mit Energie versorgt wird.

Die Temperaturinformation kann mindestens einem Temperaturmesswert entsprechen. Die Temperaturinformation kann zusätzlich oder alternativ mindestens eine aus mindestens einem Temperaturmesswert abgeleitete oder darauf beruhende Temperaturinformation sein oder aufweisen. Die Temperaturinformation mag beispielsweise mindestens einen gemessenen oder berechneten Wert einer Temperatur, mindestens eine Temperaturdifferenz und/oder mindestens einen Temperaturgradienten oder damit korrelierte Werte umfassen. Das Anpassen der Zeitpunkte der Übertragung mag also insbesondere beruhend auf bzw. in Abhängigkeit von beispielsweise einer Größe eines Temperaturwerts, einer Größe einer Temperaturdifferenz zweier zeitlich aufeinanderfolgender Temperaturwerte und/oder einer Größe eines Temperaturgradienten durchgeführt werden.

Das Gargerät kann die Temperaturinformation insbesondere dazu nutzen, um einen Energieeintrag in ein Gargut oder in einen Gargutbehälter, welcher durch die Temperaturmesseinrichtung abgefühlt wird, einzustellen. So wird ein Regelkreis bereitgestellt.

Unter einem Zeitpunkt einer Übertragung der Temperaturinformation kann beispielsweise ein Zeitpunkt eines Beginns einer Übertragung der Temperaturinformation und/oder ein Zeitpunkt eines Endes einer Übertragung der Temperaturinformation verstanden werden, als auch daraus abgeleitete Zeitwerte wie eine Zeitdauer der Übertragung, eine Zeitdauer einer Nichtübertragung zwischen aufeinanderfolgenden Übertragungen, einen Übertragungsabstand bzw. eine Übertragungsfrequenz, eine Bandbreite usw.

Das Anpassen kann ein Ändern der Zeitpunkte einer Übertragung, z.B. des Übertragungsabstands, umfassen oder kann, wenn die Zeitpunkte der Übertragung bereits wie gewünscht eingestellt sind, ein Belassen der Zeitpunkte umfassen.

Es ist eine Ausgestaltung, dass die Temperaturinformation in dem Gargerät ausgewertet wird und das Gargerät die für die Aussendung der Temperaturinformation vorgesehenen Zeitpunkte der Übertragung an die Temperaturmesseinrichtung überträgt, z.B. mittels einer Steuernachricht. Dadurch kann eine Ausgestaltung der Temperaturmesseinrichtung besonders einfach gehalten werden. Insbesondere kann so auf ein Vorsehen einer Auswerteeinheit in der Temperaturmesseinrichtung verzichtet werden. In dieser Ausgestaltung kann beispielsweise die Temperaturmesseinrichtung Temperaturmesswerte aufnehmen und als Temperaturinformation an das Gargerät übertragen. In dem Gargerät können die Temperaturmesswerte dann ausgewertet werden. Je nach dem Ergebnis der Auswertung überträgt das Gargerät dann Information, z.B. Steuerinformation, an die Temperaturmesseinrichtung, auf deren Grundlage die Temperaturmesseinrichtung die Zeitpunkte der kommenden Übertragungen der Temperaturinformation anpasst, insbesondere ändert. Die Temperaturmesseinrichtung mag zur Umsetzung dieser Ausgestaltung mit der Fähigkeit zum Empfangen von Signalen von dem Gargerät ausgestaltet sein und dazu beispielsweise zusätzlich zu einem Sender einen Empfänger oder alternativ einen Transceiver aufweisen.

Es ist noch eine Ausgestaltung, dass die Temperaturinformation in der Temperaturmesseinrichtung ausgewertet wird und die Temperaturmesseinrichtung die Zeitpunkte der Übertragung selbsttätig anpasst. Dadurch kann eine Ausgestaltung der Temperaturmesseinrichtung und des Gargeräts besonders einfach gehalten werden. So brauchen weder die Temperaturmesseinrichtung mit einem Empfänger noch das Gargerät mit einem Sender ausgerüstet zu sein. Bei dieser Ausgestaltung kann es vorteilhaft sein, dass die Temperaturmesseinrichtung die Zeitpunkte der Übertragung der Temperaturinformation bzw. deren Änderung an das Gargerät übermittelt. Dadurch kann das Gargerät, seinen Kommunikationsbetrieb, insbesondere seinen Datenempfangsbetrieb, auf die angepassten Zeitpunkte einstellen. So können insbesondere Übertragungsfehler verringert werden.

Es ist eine Weiterbildung, dass die Übertragung von Daten bzw. Information zwischen der Temperaturmesseinrichtung und dem Gargerät drahtlos erfolgt, was eine besonders flexible Positionierung ermöglicht und einen Verdrahtungsaufwand verringert. Die Übertragung mag beispielsweise per Funk oder durch Infrarotstrahlung erfolgen.

Es ist eine Weiterbildung, dass die Datenübertragung funkbasiert nach dem Bluetooth-Standard erfolgt. Dieser Standard weist den Vorteil auf, dass er weit verbreitet ist, eine nur geringe Reichweite (z.B. bis zu 5m oder 10m) aufweist und hochgradig störunanfällig ist. Bei dem Bluetooth-Standard kann eine von einem Gerät auf ein anderes Gerät übertragene Nachricht oder Telegramm mittels einer Bestätigungsnachricht ("Acknowledge" oder "Ack") bestätigt werden.

Der Bluetooth-Standard weist für den Fall, dass die Temperaturinformation in dem Gargerät ausgewertet wird und das Gargerät die Zeitpunkte der Übertragung an die Temperaturmesseinrichtung überträgt, den weiteren Vorteil auf, dass die für die Aussendung der Temperaturinformation vorgesehenen Zeitpunkte der Übertragung mittels der Bestätigungsnachricht von dem Gargerät an die Temperaturmesseinrichtung übertragen werden können. Dadurch kann eine eigenständige Steuernachricht von dem Gargerät an die Temperaturmesseinrichtung vermieden werden und vielmehr die Bestätigungsnachricht als die Steuernachricht verwendet werden, was noch mehr Energie an der Temperaturmesseinrichtung einspart. Jedoch mag grundsätzlich auch eine eigene Steuernachricht von dem Gargerät an die Temperaturmesseinrichtung übertragen werden.

Es ist eine Weiterbildung, dass die Temperaturmesseinrichtung die Temperatur des Garguts bzw. eines Gargutbehälters mit einer konstanten Messfrequenz bzw. mit einem konstanten Messabstand misst. Besonders bevorzugt sind Temperaturmessungen in Messabständen von 0,2 s bis 0,5 s. Alternativ mag auch der Messabstand auf der Grundlage der Temperaturinformation angepasst werden, was noch mehr Energie an der Temperaturmesseinrichtung einspart.

Es ist eine weitere Ausgestaltung, dass das Anpassen der Zeitpunkte ein Anpassen eines Übertragungsabstands, d.h. einer Zeitdauer zwischen einem Beginn aufeinanderfolgender Übertragungen, der von der Temperaturmesseinrichtung ausgesandten Temperaturinformation umfasst. Der Übertragungsabstand mag insbesondere einem Kehrwert einer Übertragungsfrequenz entsprechen. Der Übertragungsabstand lässt sich besonders einfach einstellen und zudem besonders einfach mit einer Temperaturmessrate oder Temperaturmessfrequenz der Temperaturmesseinrichtung korrelieren. Zudem lässt sich so eine besonders große Energieeinsparung erreichen. Beispielsweise braucht für bestimmte Garphasen, Temperaturbereiche und/oder Temperaturverläufe eines Garprozesses eine Temperaturinformation nicht so häufig zu übertragen werden, so dass dann durch einen längeren Übertragungsabstand Energie eingespart werden kann. Bei anderen Temperaturbereichen und/oder Temperaturverläufen mag hingegen eine häufige Übertragung für eine Temperaturregelung vorteilhaft sein, so dass dafür der Übertragungsabstand wieder verkürzt werden kann. Insbesondere lassen sich mit höheren Datenübertragungsraten Temperaturgradienten genauer berechnen.

Es ist eine Weiterbildung, dass der Übertragungsabstand insbesondere zumindest ungefähr einem Messabstand bzw. einer Zeitdauer zwischen einem Beginn aufeinanderfolgender Temperaturmessungen der Temperaturmesseinrichtung oder einem Vielfachen davon entspricht. Ein solcher Übertragungsabstand lässt sich besonders einfach umsetzen. Wird beispielsweise alle 0,5 s von der Temperaturmesseinrichtung eine Temperatur gemessen, mögen z.B. aufeinander folgende Temperaturinformationen mit einem Übertragungsabstand von 0,5 (kürzester Übertragungsabstand) oder einem Vielfachen davon übertragen werden, z.B. alle 1s, alle 1,5 s usw. Zur Erhöhung des Übertragungsabstands mag dann insbesondere von der Temperaturmesseinrichtung zu bestimmten Temperaturmessungen zugehörige Temperaturinformation nicht übertragen werden.

Alternativ mag dann, wenn keine Temperaturinformation übertragen zu werden braucht, auch keine Temperaturmessung durchgeführt werden. Der Messabstand mag dann insbesondere an den Übertragungsabstand angepasst werden.

Die Zeitpunkte der Übertragung der Temperaturinformation werden beruhend auf einer Temperaturdifferenz angepasst. Dies ermöglicht eine Variation der Zeitpunkte der Übertragung beispielsweise in Abhängigkeit davon, ob ein eingeschwungener Temperaturzustand eines Garprozesses erreicht worden ist oder noch nicht.

Die Temperaturdifferenz ist eine Temperaturdifferenz zwischen einem gemessenen Temperatur-Istwert und einem Temperatur-Sollwert.

Es ist eine Ausgestaltung davon, dass der Übertragungsabstand auf einen vorbestimmten Wert (im Folgenden ohne Beschränkung der Allgemeinheit als "erster Abstandswert" bezeichnet) eingestellt wird, wenn die Temperaturdifferenz größer als ein vorbestimmter erster Temperaturwert ist. So kann insbesondere bei einem Aufheizvorgang, z.B. zu Beginn eines Garablaufs bzw. während eines Anfahrens, dem Übertragungsabstand der erste Übertragungswert zugewiesen werden. Dieser erste Abstandswert ist typischerweise eher hoch, da erfahrungsgemäß während des Anfahrens eine kontinuierliche, häufige Übertragung von Messdaten nicht notwendig ist. Der Temperatur-Istwert des zu regelnden Prozesses ist dann nämlich typischerweise so weit von seinem Sollwert entfernt, dass ein Erkenntnisgewinn aus einem genau berechneten Temperaturgradienten vernachlässigt werden kann. Es reicht hier, den Garprozess nur durch gelegentliche Messungen soweit zu überwachen, dass ein starkes Überheizen oder "Davonlaufen" sicher erkannt wird.

Diese Ausgestaltung mag beispielsweise so umgesetzt sein, dass die Temperaturmesseinrichtung mit einem bestimmten Übertragungsabstand Temperaturinformation, welche einen jeweiligen Temperatur-Istwert beinhaltet, an das Gargerät übersendet. Das
Gargerät ermittelt anhand eines Vergleichs des Temperatur-Istwerts mit einem Temperatur-Sollwert, ob die Temperaturdifferenz betragsmäßig größer als ein vorbestimmter erster Temperaturwert ist. Ist dies der Fall, kann das Gargerät eine Steuerinformation an die Temperaturmesseinrichtung ausgeben, welche den ersten Übertragungswert beinhaltet. Die Temperaturmesseinrichtung kann ihren Übertragungsabstand dann auf den ersten Übertragungswert ändern, wenn der Übertragungsabstand nicht bereits den ersten Übertragungswert besitzt. Besitzt der Übertragungsabstand bereits den ersten Übertragungswert, mag das Gargerät auf eine Übertragung des Übertragungswerts an die Temperaturmesseinrichtung verzichten.

Diese Ausgestaltung kann umfassen, dass der Übertragungsabstand auf einen ersten Abstandswert D1a eingestellt wird, wenn ein Temperatur-Istwert Tist weiter als ein erster Temperaturwert T1a unterhalb eines Temperatur-Sollwerts Tsoll liegt, also

$$Tist < Tsoll - T1a \tag{1}$$

gilt. Dabei gelten Tist < Tsoll und T1a > 0.

Diese Ausgestaltung mag auch umfassen, dass der Übertragungsabstand auf einen weiteren ersten Abstandswert D1b eingestellt werden kann, wenn der Temperatur-Istwert Tist weiter als ein weiterer erster Temperaturwert T1b oberhalb des Temperatur-Sollwerts Tsoll liegt, also

$$Tist > Tsoll + T1b \tag{2}$$

gilt. Dabei gelten Tist > Tsoll und T1b > 0.

Die Gleichungen (1) und (2) entsprechen der Aussage, dass der Übertragungsabstand auf einen ersten Abstandswert D1a bzw. D1b eingestellt werden kann, wenn der Temperatur-Istwert Tist außerhalb eines Temperaturbands [Tsoll -T1a; Tsoll +T1b] liegt.

Die Gleichungen (1) und (2) mögen einzeln oder zusammen erfüllt sein. Es mag T1a = T1b gelten. Auch mag D1a = D1b gelten.

Es ist eine Weiterbildung, dass der Übertragungsabstand auf einen anderen Wert als D1a bzw. D1b eingestellt wird, wenn die Temperaturdifferenz |Tsoll - Tist| kleiner als der erste Temperaturwert T1a oder T1b ist bzw. innerhalb des Temperaturbands [Tsoll -T1a; Tsoll +T1b] liegt.

Allgemein mag eine Relation "größer" durch "größer oder gleich" ersetzt werden und/oder eine Relation "kleiner" mag durch "kleiner oder gleich" ersetzt werden.

Es ist noch eine Ausgestaltung, dass die Zeitpunkte der Übertragung der Temperaturinformation beruhend auf einem zeitlichen Temperaturgradienten angepasst werden. Dadurch wird der Vorteil erreicht, dass bestimmte Phasen eines Garprozesses, bei denen für eine effektive Temperaturregelung eine genaue Kenntnis des zeitlichen Temperaturgradienten $\Delta T/\Delta t$ vorteilhaft ist, erkannt und die Übertragungszeitpunkte entsprechend angepasst werden können. Insbesondere wird dabei ausgenutzt, dass der Temperaturgradient $\Delta T/\Delta t$ umso genauer berechenbar ist, je geringer der Übertragungsabstand bzw. je höher eine Übertragungsfrequenz ist.

Es ist eine weitere Ausgestaltung, dass der Übertragungsabstand auf einen vorbestimmten Wert D2 (im Folgenden ohne Beschränkung der Allgemeinheit als "zweiter" Abstandswert bezeichnet) eingestellt wird, wenn die absolute Temperaturdifferenz | Tsoll - Tist | zwischen dem Temperatur-Istwert Tist und dem Temperatur-Sollwert Tsoll kleiner ist als ein vorbestimmter zweiter Temperaturwert T2 und der Temperaturgradient $\Delta T/\Delta t$, insbesondere ein absoluter Temperaturgradient $|\Delta T/\Delta t|$, größer ist als ein vorbestimmter erster Gradientenwert G1.

Es gilt also, dass der Übertragungsabstand auf einen vorbestimmten Abstandswert D2 eingestellt werden kann, wenn

$$\text{Tist} > \text{Tsoll} - \text{T2, falls Tist} < \text{Tsoll und} \tag{3}$$

$$\text{Tist} < \text{Tsoll} + \text{T2, falls Tist} > \text{Tsoll} \tag{4}$$

und

$$\left|\Delta T/\Delta t\right| > G1 \tag{5}$$

gelten, wobei T2 > 0 und G1 > 0 sind. Schwingt also der Temperatur-Istwert Tist mit hoher zeitlicher Variation um den Temperatur-Sollwert Tsoll, werden die Temperatursignale mit dem Abstandswert D2 übertragen. Diese Bedingungen liegen beispielsweise vor, wenn ein Garablauf einschwingt. Hierbei ist typischerweise eine genauere Betrachtung des Temperaturgradienten $\Delta T/\Delta t$, insbesondere des absoluten Temperaturgradient $|\Delta T/\Delta t|$, notwendig. Dabei ist es zur Berechnung des Temperaturgradienten aus praktischen Gründen hilfreich, wenn der Übertragungsabstand konstant ist.

Es ist auch eine Weiterbildung, dass T1a, T1b = T2 gilt, da dann der Übertragungsabstand unmittelbar zwischen einer Anlaufphase und einer Einschwingphase eines Garprozesses umgeschaltet werden kann.

Es ist noch eine weitere Ausgestaltung, dass der Übertragungsabstand auf einen dritten Abstandswert D3 eingestellt wird, wenn die Temperaturdifferenz zwischen dem Temperatur-Istwerts Tist und dem Temperatur-Sollwert Tsoll kleiner ist als ein vorbestimmter dritter Temperaturwertwert T3 und der (absolute) Temperaturgradient $|\Delta T/\Delta t|$ kleiner ist als ein vorbestimmter zweiter Gradientenwert G2. Dadurch wird der Fall abgedeckt, dass ein Garprozess in Bezug auf seine Gartemperatur eingeschwungen ist. Der Temperaturgradient $|\Delta T/\Delta t|$ ist dabei erwartungsgemäß sehr gering und im Rahmen der benötigten Regelgenauigkeit typischerweise nicht weiter interessant.

Es gilt also, dass der Übertragungsabstand auf einen vorbestimmten Wert D3 eingestellt werden kann, wenn

$$\text{Tist} > \text{Tsoll} - \text{T3, falls Tist} < \text{Tsoll und} \tag{6}$$

$$\text{Tist} < \text{Tsoll} + \text{T3, falls Tist} > \text{Tsoll} \tag{7}$$

und

$$\left|\Delta T/\Delta t\right| < G2 \qquad\qquad\qquad (8)$$

gilt, wobei T3 > 0 und G2 > 0 sind. Schwingt also der Temperatur-Istwerts Tist mit geringer zeitlicher Variation eng um den Temperatur-Sollwert Tsoll, werden die Temperatursignale mit dem Abstandswert D3 übertragen.

Es ist eine Weiterbildung, dass T2 = T3 gilt. So kann der Fall abgebildet werden, dass innerhalb eines Temperaturbands [Tsoll -T2; Tsoll +T2] der Abstandswert nur von dem Wert des Temperaturgradienten $|\Delta T/\Delta t|$ abhängt.

Es ist noch eine Weiterbildung, dass T1a = T1b = T2 = T3 gilt. So kann der Fall abgebildet werden, dass innerhalb eines Temperaturbands [Tsoll -T2; Tsoll +T2] der Abstandswert nur von dem Wert des Temperaturgradienten $|\Delta T/\Delta t|$ abhängt und außerhalb des Bands dem ersten Abstandswert D1a bzw. D1b entspricht.

Es ist auch eine Weiterbildung, dass G1 = G2 gilt. So kann ein Umschalten des Abstandswerts in Abhängigkeit von Erreichen oder Überschreiten bzw. Unterschreiten des Gradientenwerts G1 des Temperaturgradienten $|\Delta T/\Delta t|$ umgesetzt werden.

Es ist ferner eine Ausgestaltung, dass der erste Abstandswert D1a bzw. D1b der Datenübertragungsrate und/oder der dritte Abstandswert D3 des Übertragungsabstands größer sind als der zweite Abstandswert D2 des Übertragungsabstands, d.h., dass D1a, D1b > D2 und D3 > D2 gelten. So kann in den zu den Übertragungsabständen D1a bzw. D1b und D3 zugehörigen Garprozessabschnitten der Übertragungsabstand im Vergleich zu D2 erhöht werden, was Energie spart. Allgemein kann ein Übertragungsabstand insbesondere in solchen Phasen oder Abschnitten vergrößert werden, wenn keine oder keine genaue Berechnung eines Temperaturgradienten benötigt wird.

Es ist eine Weiterbildung, dass D1a = D3 und/oder D2a = D3 gilt. So ergibt sich der Vorteil, dass nur zwischen wenigen (mindestens zwei) Abstandswerten umgeschaltet zu werden braucht.

Insbesondere kann also der Fall abgebildet werden, bei dem der Übertragungsabstand außerhalb eines Temperaturbands [Tsoll -T2; Tsoll +T2] den Abstandswert D3 annimmt und innerhalb dieses Temperaturbands entweder der Abstandswert D3 beibehalten wird, wenn der Temperaturgradient $|\Delta T/\Delta t|$ einen Wert kleiner als G1 aufweist, oder auf einen kleineren Abstandswert D2 umgeschaltet wird, wenn der Temperaturgradient $|\Delta T/\Delta t|$ einen Wert größer als G1 aufweist. Das Umschalten kann grundsätzlich in beiden Richtungen durchgeführt werden.

Es ist auch eine Ausgestaltung, dass der erste Abstandswert D1a, D1b und/oder der dritte Abstandswert D3 des Übertragungsabstands um einen Faktor 5 bis 20 größer sind als der zweite Abstandswert D2. Somit kann die zur Datenübertragung notwendige Energie aufgrund der entsprechend längeren Sendeabstände mit diesem Faktor eingespart werden. Es hat sich gezeigt, dass ein solcher Faktor einen besonders guten Kompromiss zwischen einer Energieeinsparung und einer ausreichend genauen Temperaturregelung darstellt, falls zur Temperaturregelung keine oder keine genaue Kenntnis des Temperaturgradienten erforderlich ist.

Die Aufgabe wird auch gelöst durch ein System mit einem Gargerät und mindestens einer Temperaturmesseinrichtung, wobei das System zur Durchführung des Verfahrens wie oben beschrieben eingerichtet ist. Das System kann analog zu dem Verfahren ausgebildet werden und weist die gleichen Vorteile auf. Ein Gargerät kann insbesondere eine Temperaturregelung mit mehreren Temperaturmesseinrichtungen unabhängig voneinander durchführen.

Die Temperaturmesseinrichtung kann eine Temperatur des Garguts direkt messen, z.B. mittels eines Kontakts mit dem Gargut oder mittels einer IR-Abtastung des Garguts. Die Temperaturmesseinrichtung kann eine Temperatur des Garguts alternativ oder zusätzlich indirekt messen, z.B. durch Messung einer Temperatur eines Gargutbehälters oder Gargeschirrs.

Die Temperaturmesseinrichtung kann mindestens einen Temperaturfühler oder Temperatursensor aufweisen, welcher die Temperaturmesswerte aufnimmt oder misst oder abfühlt.

Der mindestens einen Temperaturfühler kann mit einer Datenverarbeitungseinrichtung der Temperaturmesseinrichtung gekoppelt sein, welche die Temperaturmesswerte zu Temperaturinformation verarbeitet. Die Temperaturinformation mag mittels einer Datenübertragungseinrichtung drahtlos übertragen oder ausgesandt werden. Die Datenübertragungseinrichtung mag als ein Sender oder ein Transceiver dienen, z.B. als ein Funk- oder IR-Sender. Sie mag auch zum Empfang von Daten von dem Gargerät ausgebildet sein, z.B. als ein Funk- oder IR- Empfänger. Die Datenübertragungseinrichtung kann in die Datenverarbeitungseinrichtung integriert sein bzw. die Datenverarbeitungseinrichtung die Funktion einer Datenübertragungseinrichtung aufweisen. Der mindestens eine Temperaturfühler mag eine eigenständige Komponente sein oder mag in die Datenverarbeitungseinrichtung integriert sein. Je nach Ausgestaltung mag die Datenverarbeitungseinrichtung auch zum Bestimmen der Zeitpunkte der Übertragung eingerichtet sein.

Es ist auch noch eine Ausgestaltung, dass die Temperaturmesseinrichtung zur lösbaren Abbringung an einer Außenseite eines Gargutbehälters oder Gargeschirrs eingerichtet ist. Die Anbringung kann z.B. magnetisch oder mechanisch erfolgen. Der Gargutbehälter mag z.B. ein Topf oder ein Pfanne sein. Für den Fall eines Topfs mag die Temperaturmesseinrichtung an einem Deckel oder an einer Seitenwand des Gargutbehälters angeordnet sein. Die Temperaturmesseinrichtung mag aber auch fest an dem Gargutbehälter installiert sein. Die Temperaturmesseinrichtung mag ferner eine eigenständig handhabbare Einrichtung sein, z.B. ein Kerntemperaturfühler.

Die Temperaturmesseinrichtung kann mindestens einen Energiespeicher und/oder mindestens eine Aufnahme für mindestens einen Energiespeicher aufweisen, so dass sie autark betrieben werden kann. Der Energiespeicher mag z.B. eine nicht-wiederaufladbare Batterie oder eine wiederaufladbare Batterie, insbesondere ein Akkumulator, sein. Der Energiespeicher mag auch mindestens ein Kondensator sein, z.B. mindestens ein Superkondensator oder Ultrakondensator. Insbesondere für diese Weiterbildung ist das Verfahren vorteilhaft einsetzbar, da sich so eine Betriebsdauer des Energiespeichers signifikant verlängern lässt.

Die Temperaturmesseinrichtung kann zusätzlich oder alternativ eine Energieerzeugungseinrichtung aufweisen, z.B. einen Thermogenerator und/oder eine Solarzelle.

Auch hierfür eignet sich die Erfindung besonders, da eine erzeugte Energiemenge häufig eher gering ist.

Das Gargerät ist dazu eingerichtet, die von der mindestens einen Temperaturmesseinrichtung übertragene Temperaturinformation zu empfangen und zur Regelung eines Energieübertrags auf einen mit der zugehörigen Temperaturmesseinrichtung ausgerüsteten Gargutbehälter oder Gargeschirr zu nutzen. Das Gargerät mag dazu einen Empfänger für die von der mindestens einen Temperaturmesseinrichtung übertragene Temperaturinformation aufweisen.

Das Gargerät mag beispielsweise ein Kochgerät, ein Ofen oder eine Kombination daraus sein.

Das Gargerät mag in einer Ausgestaltung auch einen Sender zum Übertragen von Information, z.B. von Steuerinformation bezüglich der Zeitpunkte einer Übertragung von Temperaturinformation durch die Temperaturmesseinrichtung, aufweisen. Der Sender und der Empfänger mögen getrennte Komponenten sein oder z.B. in einem Transceiver funktional vereint sein.

Die Aufgabe wird ferner gelöst durch eine Temperaturmesseinrichtung für Gargut, die dazu eingerichtet ist, Zeitpunkte einer Übertragung von Temperaturinformation anzupassen, insbesondere einen Übertragungsabstand. Die Temperaturmesseinrichtung mag wie oben beschrieben ausgebildet sein, kann analog zu dem Verfahren und/oder dem System ausgebildet werden und weist die gleichen Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.

Fig.1    zeigt als Schnittdarstellung in Seitenansicht ein System mit einem Gargerät und einem Gargutbehälter; und

Fig.2    zeigt einen Temperaturverlauf eines typischen Garprozesses, der in dem Gargutbehälter abläuft, als eine Auftragung einer Temperatur T über die Zeit t.

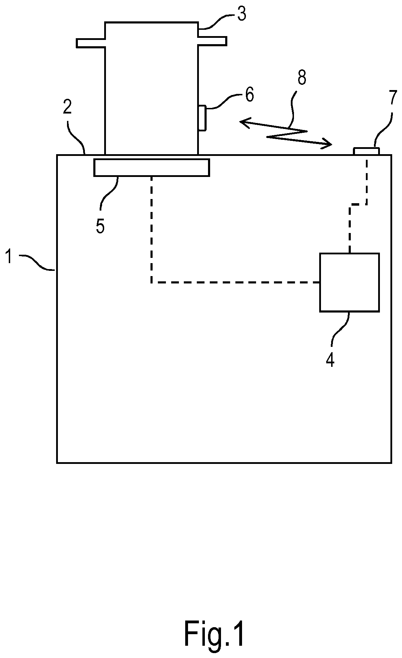

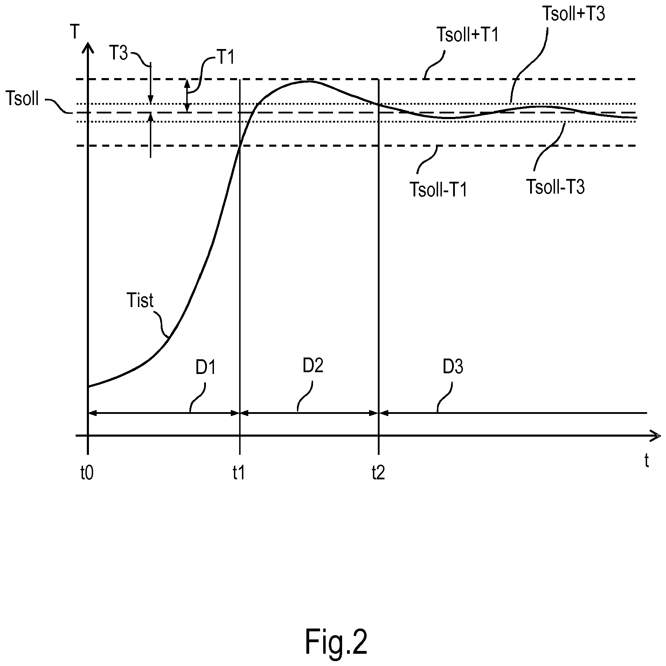

**Fig.1** zeigt ein System mit einem Gargerät in Form eines Kochgeräts 1, das mit einem oberseitigen Kochfeld 2 ausgestattet ist, und mit einem Gargutbehälter in Form eines beispielhaft ausgewählten Topfs 3. Das Kochgerät 1, z.B. ein eigenständiges Kochfeld oder ein Herd, weist eine Steuereinrichtung 4 auf, die ein Heizelement 5 ansteuert. Das Heizelement 5, z.B. ein elektrisch betriebener Strahlungsheizkörper, eine Induktionsspule oder ein Gasbrenner, erzeugt Energie, die auf den Topf 3 übertragen wird. In dem Topf 3 befindliches Gargut (o. Abb.) kann dadurch aufgeheizt werden. Die Steuereinrichtung 4 kann die Stärke des Energieeintrags einstellen, z.B. in Abhängigkeit von einer durch einen Nutzer eingestellten Kochstufe. Lässt sich ein aktueller Temperatur-Istwert Tist des Garguts (siehe auch Fig.2) ermitteln, kann die Steuereinrichtung 4 den Energieeintrag auch so steuern, dass der Temperatur-Istwert Tist auf einen Temperatur-Sollwert Tsoll (siehe auch Fig.2) eingeregelt wird.

Der Temperatur-Istwert Tist des Garguts wird hier indirekt mittels einer Temperaturmesseinrichtung 6 ermittelt, die lösbar oder unlösbar an einer Außenseite einer Seitenwand des Topfs 3 angeordnet ist und die dortige Temperatur misst. Der Temperatur-Istwert Tist an der Außenseite der Seitenwand des Topfs 3 mag dabei z.B. dem Temperatur-Istwert des Garguts gleichgesetzt werden oder wird mit dem Temperatur-Istwert des Garguts korreliert.

Zur Datenübertragung mit dem Kochgerät 1 ist die Temperaturmesseinrichtung 6 hier nach dem Bluetooth-Standard ausgebildet und kann Daten bzw. Nachrichten oder Telegramme usw. an das Kochgerät 1 übertragen bzw. aussenden und davon empfangen. Das Kochgerät 1 kann entsprechend nach dem Bluetooth-Standard Daten bzw. Nachrichten oder Telegramme von dem Topf 3 empfangen und an den Topf 3 übertragen. Dazu mag das Kochgerät 1 ein Bluetooth-Modul 7 aufweisen. Zwischen der Temperaturmesseinrichtung 6 und dem Bluetooth-Modul 7 kann also eine Bluetooth-Funkverbindung 8 zur Datenübertragung hergestellt werden. Das Bluetooth-Modul 7 ist mit der Steuereinrichtung 4 verbunden, so dass die Steuereinrichtung 4 von dem Bluetooth-Modul 7 empfangene Daten auswerten kann. Insbesondere kann die Steuereinrichtung 4 von dem Topf 3 empfangene Daten oder Nachrichten usw., welche eine Temperaturinformation aufweisen, auswerten und die Temperaturinformation zur Regelung des Temperatur-Istwerts Tist nutzen.

Die Temperaturmesseinrichtung 6 ist autark betreibbar und weist dazu einen Energiespeicher (o. Abb.), z.B. eine Batterie oder einen Akkumulator, auf. Sie weist ferner einen Temperatursensor (o. Abb.) auf, z.B. einen IR-Thermopile, um den Temperatur-Istwert an der Außenseite der Seitenwand des Topfs 3 abzufühlen. Die Temperaturmessung geschieht hier mit einer festen Messfrequenz bzw. mit einem festen zeitlichen Messabstand, beispielsweise alle 0,2 s bis 0,5 s. Die von dem Temperatursensor beruhend auf dem Temperatur-Istwert erzeugten Temperatursignale werden von einer Datenverarbeitungseinheit (o. Abb.) der Temperaturmesseinrichtung 6 in Temperaturinformation umgewandelt, z.B. digitalisiert, und über die Bluetooth-Funkverbindung 8 an das Bluetooth-Modul 7 des Kochgeräts 1 übertragen. In dem vorliegenden Ausführungsbeispiel entspricht die übertragene Temperaturinformation dem Temperatur-Istwert Tist oder einem damit direkt zusammenhängenden Wert, z.B. einem Spannungswert.

Um Energie zu sparen und damit eine maximale Betriebsdauer der Temperaturmesseinrichtung 6 zu erhöhen, ist die Temperaturmesseinrichtung 6 dazu eingerichtet, Zeitpunkte einer Übertragung der Temperaturinformation anzupassen, und zwar hier eine Übertragungsfrequenz bzw. einen zeitlichen Übertragungsabstand von Nachrichten oder Telegrammen usw., welche die Temperaturinformation aufweisen. Dazu kann die Steuereinrichtung 4 beruhend auf einer Auswertung der Temperaturinformation feststellen, ob ein kürzerer oder ein längerer Übertragungsabstand bzw. eine höhere bzw. eine niedrigere Übertragungsfrequenz für eine effektive Regelung der Gartemperatur benötigt wird. Der benötigte oder gewünschte Übertragungsabstand wird nach Empfang einer Temperaturinformation über das Bluetooth-Modul 7 mittels einer Bestätigungsnachricht an die Temperaturmesseinrichtung 6 übertragen. Die Temperaturmesseinrichtung 6 ändert dann seinen Übertragungsabstand auf den gewünschten Abstandswert, wenn der gewünschte Abstandswert nicht schon verwendet wird. Für eine besonders leichte Umsetzung kann der Abstandswert auf den festen zeitlichen Messabstand oder ein Vielfaches davon eingestellt werden. Der kürzeste Abstandswert der Übertragung der Temperaturinformation entspricht vorteilhafterweise dem festen zeitlichen Messabstand, also z.B. 0,2 s bis 0,5 s. Der nächstgrößere Abstandswert der Übertragung der Temperaturinformation mag dem Doppelten des Messabstands entsprechen und dadurch erreicht werden, dass die Datenverarbeitungseinheit der Temperaturmesseinrichtung 6 nur jeden zweiten Messwert verarbeitet und/oder überträgt usw.

Fig.2 zeigt einen Verlauf des Temperatur-Istwerts Tist über eine abgelaufene Zeit eines typischen Garprozesses, der in dem Topf 3 abläuft. Der Temperatur-Istwert Tist wird mittels der Temperaturmesseinrichtung 6 abgefühlt und als Temperaturinformation an das Kochgerät 1 übertragen.

In einem ersten Abschnitt des Garprozesses, der mit einem Aktivieren eines Energieübertrags auf den Topf 3 durch das Heizelement 5 zu einem Zeitpunkt t0 = 0 beginnt, wird der Temperatur-Istwert Tist zunächst stark ansteigen, um einen Temperatur-Sollwert Tsoll zu erreichen. Während dieses Anfahrens ist eine kontinuierliche, häufige Übertragung der Temperaturinformation nicht notwendig. Der Temperatur-Istwert Tist des zu regelnden Prozesses ist nämlich typischerweise so weit von seinem Sollwert Tsoll entfernt, dass ein Erkenntnisgewinn aus einem genau berechneten Temperaturgradienten vernachlässigt werden kann. Es reicht hier, den Garprozess durch gelegentliche Messungen nur soweit zu überwachen, dass ein "Davonlaufen" sicher erkannt wird.

Die Steuereinrichtung 4 erkennt, dass der Garprozess noch anfährt, indem sie überprüft, ob die mit der Temperaturinformation übertragenen gemessenen Temperatur-Istwerte Tist noch weiter von dem Temperatur-Sollwert Tsoll entfernt sind als ein erster Temperaturwert T1. Dies entspricht einem Vergleich nach Gl. (1) mit T1a = T1. Ist dies der Fall, überträgt das Kochgerät 1 mit beispielsweise jeder Bestätigungsnachricht einen Übertragungsabstand D1 als Steuerinformation an die Temperaturmesseinrichtung 6. Überträgt die Temperaturmesseinrichtung 6 bereits mit dem Übertragungsabstand D1, wird keine Aktion durchgeführt, sonst auf den Übertragungsabstand D1 umgestellt. Der Übertragungsabstand D1 mag insbesondere einem fünf- bis zwanzigfachen des Messabstands, so dass also insbesondere eine Temperaturinformation nur alle 1 s bis 20 s übertragen wird.

Erreicht oder überschreitet der Temperatur-Istwert Tist den Wert Tsoll - T1 (hier bei einem Zeitpunkt t1 > t0), geht die Anfahrphase des Garprozesses in eine zweite Phase des Garprozesses über, die auch als Einschwingphase bezeichnet werden kann. Zur schnellen und genauen Temperaturregelung ist nun eine genaue Kenntnis eines zeitlichen Temperaturgradienten vorteilhaft. Mit Erreichen der Einschwingphase weist die Steuervorrichtung 4 daher die Temperaturmesseinrichtung 6 an, den Übertragungsabstand auf einen zweiten Abstandswert D2 zu verkürzen, z.B. auf den Messabstand, so dass dann eine Temperaturinformation alle 0,2 s bis 0,5 s übertragen wird. Die Steuervorrichtung 4 bestimmt aus der Temperaturinformation nun den Temperatur-Istwert Tist als auch einen Temperaturgradienten $\Delta T/\Delta t$, z.B. aus zwei aufeinanderfolgenden Temperaturinformationen oder durch eine Funktionsanpassung.

Die Steuervorrichtung 4 überträgt den zweiten Abstandswert D2 solange als Steuerinformation an die Temperaturmesseinrichtung 6, wie die absolute Temperaturdifferenz |Tsoll - Tist| kleiner ist als der Temperaturwert T1 und der absolute Temperaturgradient $|\Delta T/\Delta t|$ größer ist als ein vorbestimmter erster Gradientenwert G1. Dies entspricht den Gl. (3) und (4) mit T2 = T1 sowie Gl. (5) mit D2 < D1. Dabei wird ausgenutzt, dass die Einschwingphase erkannt werden kann durch eine hohe zeitlicher Variation des Temperatur-Istwerts Tist um den Temperatur-Sollwert Tsoll.

Der Einschwingvorgang geht nach einiger Zeit, hier zu einem Zeitpunkt t2 > t1, in einen eingeschwungenen Zustand über, bei dem der Temperatur-Istwert Tist nur wenig um den Temperatur-Sollwert Tsoll schwankt und zudem erwartungsgemäß keine schnellen Ausschläge mehr zeigt. Der Temperaturgradient ist dabei sehr gering und im Rahmen der benötigten Regelgenauigkeit typischerweise nicht weiter interessant.

Die Steuervorrichtung 4 überträgt deshalb in dem eingeschwungenen Zustand einen dritten Abstandswert D3 an die Temperaturmesseinrichtung 6, solange die Temperaturdifferenz zwischen dem Temperatur-Istwerts Tist und dem Temperatur-Sollwert Tsoll kleiner ist als ein vorbestimmter dritter Temperaturwertwert T3 und der (absolute) Temperaturgradient |ΔT/Δt| kleiner ist als ein vorbestimmter zweiter Gradientenwert G2. Dies entspricht den Gl. (6) bis (8) mit D3 > D2. Der dritte Abstandswert D3 mag kleiner, größer oder gleich dem ersten Abstandswert D1 sein. Insbesondere mag T3 < T2 oder T3 = T2 gelten. Insbesondere mag G2 < G1 gelten.

Selbstverständlich ist die vorliegende Erfindung nicht auf das gezeigte Ausführungsbeispiel beschränkt.

So kann die Temperaturmesseinrichtung auch zum Betrieb innerhalb eines Ofenraums eingerichtet ein, z.B. als ein Kerntemperaturfühler.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

**Bezugszeichenliste**

| 1 | Kochgerät |
|---|---|
| 2 | Kochfeld |
| 3 | Topf |
| 4 | Steuereinrichtung |
| 5 | Heizelement |
| 6 | Temperaturmesseinrichtung |
| 7 | Bluetooth-Modul |
| 8 | Bluetooth-Funkverbindung |
| D1 | Erster Übertragungsabstand |
| D2 | Zweiter Übertragungsabstand |
| D3 | Dritter Übertragungsabstand |
| G1 | Erster Gradientenwert |
| G2 | Zweiter Gradientenwert |
| Tist | Temperatur-Istwert |
| Tsoll | Temperatur-Sollwert |
| t0 | Zeitpunkt des Beginns der Anlaufphase |
| t1 | Zeitpunkt des Beginns der Einschwingphase |
| t2 | Zeitpunkt des Beginns der eingeschwungenen Phase |
| T1 | Erster Temperaturwert |
| T2 | Zweiter Temperaturwert |
| T3 | Dritter Temperaturwert |
| Tist | Temperatur-Istwert |
| Tsoll | Temperatur-Sollwert |
| ΔT/Δt | Temperaturgradient |

**Patentansprüche**

1. Verfahren zum Regeln einer Temperatur eines Garguts, bei dem

    - eine Temperaturmesseinrichtung (6) Temperaturinformation (Tist) an ein Gargerät (1) mit bestimmten Zeitpunkten überträgt, und
    - die Zeitpunkte der Übertragung der Temperaturinformation (Tist) auf einer Grundlage der Temperaturinformation (Tist) angepasst werden,

    **dadurch gekennzeichnet, dass**

    - die Zeitpunkte der Übertragung der Temperaturinformation (Tist) beruhend auf einer Temperaturdifferenz zwischen einem gemessenen Temperatur-Istwert (Tist) und einem Temperatur-Sollwert (Tsoll) angepasst werden.

**2.** Verfahren nach Anspruch 1, **dadurch gekennzeichnet, dass** die Temperaturinformation (Tist) in dem Gargerät (1) ausgewertet wird und das Gargerät (1) die Zeitpunkte der Übertragung an die Temperaturmesseinrichtung (6) überträgt.

**3.** Verfahren nach Anspruch 1, **dadurch gekennzeichnet, dass** die Temperaturinformation (Tist) in der Temperaturmesseinrichtung (6) ausgewertet wird und die Temperaturmesseinrichtung (6) die Zeitpunkte der Übertragung selbsttätig anpasst.

**4.** Verfahren nach einem der vorhergehenden Ansprüche, **dadurch gekennzeichnet, dass** das Anpassen der Zeitpunkte ein Anpassen eines Übertragungsabstands (D1, D2, D3) der Temperaturinformation (Tist) umfasst.

**5.** Verfahren nach Anspruch 4, **dadurch gekennzeichnet, dass** der Übertragungsabstand (D1, D2, D3) auf einen ersten Abstandswert (D1) eingestellt wird, wenn die Temperaturdifferenz (|Tsoll-Tist|) größer als ein vorbestimmter erster Temperaturwert (T1) ist.

**6.** Verfahren nach einem der vorhergehenden Ansprüche, **dadurch gekennzeichnet, dass** die Zeitpunkte der Übertragung der Temperaturinformation (Tist) beruhend auf einem zeitlichen Temperaturgradienten ($\Delta T/\Delta t$) angepasst werden.

**7.** Verfahren nach Anspruch 6 in Kombination mit Anspruch 4, **dadurch gekennzeichnet, dass** der Übertragungsabstand (D1, D2, D3) auf einen zweiten Abstandswert (D2) eingestellt wird, wenn die Temperaturdifferenz (|Tsoll-Tist|) kleiner ist als ein vorbestimmter zweiter Temperaturwert (T1) und der Temperaturgradient ($\Delta T/\Delta t$) größer ist als ein vorbestimmter erster Gradientenwert (G1) ist.

**8.** Verfahren nach den Ansprüchen 6 oder 7 in Kombination mit Anspruch 4, **dadurch gekennzeichnet, dass** der Übertragungsabstand (D1, D2, D3) auf einen dritten Abstandswert (D3) eingestellt wird, wenn die Temperaturdifferenz (|Tsoll-Tist|) kleiner ist als ein vorbestimmter dritter Temperaturwert (T3) und der Temperaturgradient ($\Delta T/\Delta t$) kleiner ist als ein vorbestimmter zweiter Gradientenwert (G2).

**9.** Verfahren nach den Ansprüchen 5, 7 und 8, **dadurch gekennzeichnet, dass** der erste Abstandswert (D1) und/oder der dritte Abstandswert (D3) des Übertragungsabstands größer sind als der zweite Abstandswert (D2) des Übertragungsabstands.

**10.** Verfahren nach Anspruch 9, **dadurch gekennzeichnet, dass** der erste Abstandswert (D1) und/oder der dritte Abstandswert (D3) des Übertragungsabstands um einen Faktor 5 bis 20 größer sind als der zweite Abstandswert (D2) des Übertragungsabstands.

**11.** Temperaturmesseinrichtung (6) für Gargut mit einem Sender zum Übertragen von Temperaturinformation (Tist), **dadurch gekennzeichnet, dass** die Temperaturmesseinrichtung (6) dazu eingerichtet ist, Zeitpunkte einer Übertragung der Temperaturinformation (Tist) anzupassen, **dadurch gekennzeichnet, dass** die Temperaturmesseinrichtung (6) dazu eingerichtet ist, Zeitpunkte einer Übertragung der Temperaturinformation (Tist) beruhend auf einer Temperaturdifferenz zwischen einem gemessenen Temperatur-Istwert (Tist) und einem Temperatur-Sollwert (Tsoll) anzupassen.

**12.** System (1, 6) mit einem Gargerät (1) und mindestens einer Temperaturmesseinrichtung (6) nach Anspruch 11 **dadurch gekennzeichnet, dass** das System (1, 6) zur Durchführung des Verfahrens nach einem der Ansprüche 1-10 eingerichtet ist.

**13.** System nach Anspruch 11, **dadurch gekennzeichnet, dass** die Temperaturmesseinrichtung (6) mindestens einen Energiespeicher und/oder mindestens eine Aufnahme für mindestens einen Energiespeicher aufweist.

**14.** System nach einem der Ansprüche 12 oder 13, **dadurch gekennzeichnet, dass** die Temperaturmesseinrichtung (6) zur Anbringung an einer Außenseite eines Gargutbehälters (3) eingerichtet ist.

**Claims**

**1.** Method for regulating a temperature of an item to be cooked, in which

- a temperature measuring facility (6) transmits temperature information (Tact) to a cooking appliance (1) at specific points in time, and
- the points in time of the transmission of the temperature information (Tact) are adjusted on the basis of the temperature information (Tact),

**characterised in that**

- the points in time of the transmission of the temperature information (Tact) are adjusted based on a temperature difference between a measured temperature actual value (Tact) and a temperature target value (Ttar).

2. Method according to claim 1, **characterised in that** the temperature information (Tact) is evaluated in the cooking appliance (1) and the cooking appliance (1) transmits the points in time of the transmission to the temperature measuring facility (6).

3. Method according to claim 1, **characterised in that** the temperature information (Tact) is evaluated in the temperature measuring facility (6) and the temperature measuring facility (6) adjusts the points in time of the transmission automatically.

4. Method according to one of the preceding claims, **characterised in that** the adjustment of the points in time comprises an adjustment of a transmission distance (D1, D2, D3) of the temperature information (Tact).

5. Method according to claim 4, **characterised in that** the transmission distance (D1, D2, D3) is set at a first distance value (D1), if the temperature difference ($|Ttar - Tact|$) is greater than a predetermined first temperature value (T1).

6. Method according to one of the preceding claims, **characterised in that** the points in time of the transmission of the temperature information (Tact) is adjusted based on a temporal temperature gradient ($\Delta T/\Delta t$).

7. Method according to claim 6 in combination with claim 4, **characterised in that** the transmission distance (D1, D2, D3) is set at a second distance value (D2), if the temperature different ($|Ttar - Tact|$) is less than a predetermined second temperature value (T1) and the temperature gradient ($\Delta T/\Delta t$) is greater than a predetermined first gradient value (G1).

8. Method according to claims 6 or 7 in combination with claim 4, **characterised in that** the transmission distance (D1, D2, D3) is set at a third distance value (D3) if the temperature difference ($|Ttar - Tact|$) is less than a predetermined third temperature value (T3) and the temperature gradient ($\Delta T/\Delta t$) is less than a predetermined second gradient value (G2).

9. Method according to claims 5, 7 and 8, **characterised in that** the first distance value (D1) and/or the third distance value (D3) of the transmission distance are greater than the second distance value (D2) of the transmission distance.

10. Method according to claim 9, **characterised in that** the first distance value (D1) and/or the third distance value (D3) of the transmission distance is greater by a factor of 5 to 20 than the second distance value (D2) of the transmission distance.

11. Temperature measuring facility (6) for an item to be cooked with a transmitter for transmitting temperature information (Tact), **characterised in that** the temperature measuring facility (6) is set up to adjust points in time of a transmission of the temperature information (Tact), **characterised in that** the temperature measuring facility (6) is designed to adjust points in time of a transmission of the temperature information (Tact) based on a temperature difference between a measured temperature actual value (Tact) and a temperature target value (Ttar).

12. System (1, 6) with a cooking appliance (1) and at least one temperature measuring facility (6) as claimed in claim 11, **characterised in that** the system (1, 6) is set up to carry out the method as claimed in one of claims 1 - 10.

13. System according to claim 11, **characterised in that** the temperature measuring facility (6) has at least one energy store and/or at least one holder for at least one energy store.

14. System according to one of claims 12 or 13, **characterised in that** the temperature measuring facility (6) is set up for attachment on an exterior of a container for an item to be cooked (3).

**Revendications**

1. Procédé de réglage d'une température d'un aliment à cuire, dans lequel

   - un dispositif de mesure de température (6) transmet une information de température (Tist) à un appareil de cuisson (1) avec des instants déterminés, et
   - les instants de la transmission de l'information de température (Tist) sont adaptés sur la base de ladite information de température (Tist),

   **caractérisé en ce que**

   - les instants de la transmission de l'information de température (Tist) sont adaptés sur la base d'une différence de température entre une valeur de température réelle mesurée (Tist) et une valeur de température de consigne (Tsoll).

2. Procédé selon la revendication 1, **caractérisé en ce que** l'information de température (Tist) est évaluée dans l'appareil de cuisson (1), et l'appareil de cuisson (1) transmet les instants de la transmission au dispositif de mesure de température (6).

3. Procédé selon la revendication 1, **caractérisé en ce que** l'information de température (Tist) est évaluée dans le dispositif de mesure de température (6), et le dispositif de mesure de température (6) adapte automatiquement les instants de la transmission.

4. Procédé selon l'une des revendications précédentes, **caractérisé en ce que** l'adaptation des instants comprend une adaptation d'une distance de transmission (D1, D2, D3) de l'information de température (Tist).

5. Procédé selon la revendication 4, **caractérisé en ce que** la distance de transmission (D1, D2, D3) est réglée sur une première valeur de distance (D1) lorsque la différence de température (|Tsoll-Tist|) est supérieure à une première valeur de température prédéterminée (T1).

6. Procédé selon l'une des revendications précédentes, **caractérisé en ce que** les instants de la transmission de l'information de température (Tist) sont adaptés sur la base d'un gradient de température ($\Delta T/\Delta t$) en fonction du temps.

7. Procédé selon la revendication 6 en combinaison avec la revendication 4, **caractérisé en ce que** la distance de transmission (D1, D2, D3) est réglée sur une deuxième valeur de distance (D2) lorsque la différence de température (|Tsoll-Tist|) est inférieure à une deuxième valeur de température prédéterminée (T1) et le gradient de température ($\Delta T/\Delta t$) est supérieur à une première valeur de gradient prédéterminée (G1).

8. Procédé selon les revendications 6 ou 7 en combinaison avec la revendication 4, **caractérisé en ce que** la distance de transmission (D1, D2, D3) est réglée sur une troisième valeur de distance (D3) lorsque la différence de température (|Tsoll-Tist|) est inférieure à une troisième valeur de température prédéterminée (T3) et le gradient de température ($\Delta T/\Delta t$) est inférieur à une deuxième valeur de gradient prédéterminée (G2).

9. Procédé selon les revendications 5, 7 et 8, **caractérisé en ce que** la première valeur de distance (D1) et/ou la troisième valeur de distance (D3) de la distance de transmission sont supérieures à la deuxième valeur de distance (D2) de la distance de transmission.

10. Procédé selon la revendication 9, **caractérisé en ce que** la première valeur de distance (D1) et/ou la troisième valeur de distance (D3) de la distance de transmission sont supérieures d'un facteur de 5 à 20 à la deuxième valeur de distance (D2) de la distance de transmission.

11. Dispositif de mesure de température (6) pour des aliments à cuire comprenant un émetteur pour transmettre une information de température (Tist), **caractérisé en ce que** le dispositif de mesure de température (6) est conçu pour adapter les instants d'une transmission de l'information de température (Tist), **caractérisé en ce que** le dispositif de mesure de température (6) est conçu pour adapter les instants d'une transmission de l'information de température (Tist) sur la base d'une différence de température entre une valeur de température réelle mesurée (Tist) et une valeur de température de consigne (Tsoll).

**12.** Système (1, 6) comprenant un appareil de cuisson (1) et au moins un dispositif de mesure de température (6) selon la revendication 11, **caractérisé en ce que** le système (1, 6) est conçu pour la mise en oeuvre du procédé selon l'une des revendications 1 à 10.

**13.** Système selon la revendication 11, **caractérisé en ce que** le dispositif de mesure de température (6) comporte au moins un accumulateur d'énergie et/ou au moins un logement pour au moins un accumulateur d'énergie.

**14.** Système selon l'une des revendications 12 ou 13, **caractérisé en ce que** le dispositif de mesure de température (6) est conçu pour être fixé sur un côté extérieur d'un récipient pour aliment à cuire (3).

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004013621 A1
- DE 102008015973 A1
- US 2007080158 A1
- US 5746114 A
- WO 2014190160 A1
- FR 2931648 A1